# EUROPEAN PATENT APPLICATION

(11) **EP 4 806 271 A1**
(43) Date of publication of application: **16.09.2026**
(21) Application number: 26159701.7
(22) Date of filing: 19.02.2026
(51) Int. Cl.: A21C 7/01, A21C 7/04

(54) **DEVICE FOR ROUNDING DOUGH PIECES**

(30) Priority: 12.03.2025 NL 2039960
(71) Applicant: Radie B.V., 4104 BC Culemborg (NL)
(72) Inventor: van Blokland, Johannes Josephus Antonius, 4104BC Culemborg (NL)
(74) Representative: IP Maison

(57) **Abstract**

The invention relates to a device (1) for rounding dough pieces, comprising:
- a conveyor (2) with a transport surface (2A) for transporting the dough pieces (3) in a transport direction (T);
- A first mould part (4):
∘ comprising one or more cups (4A) with an opening facing the transport surface (2A),
∘ with a directional component (D) perpendicular to the transport surface, movable between:
• a rounding position in which the first mould part (4) rests on the transport surface (2A); and
• a release position in which the first mould part (4) is located at a distance from the transport surface (2A);

- A second mould part (5):
∘ comprising one or more cups (5A) with an opening facing the transport surface (2A),
∘ movable with a directional component (D) perpendicular to the transport surface (2A), between
• a rounding position in which the second mould part (5) is positioned adjacent to the transport surface (2A); and
• a release position in which the second mould part (5) is located at a distance from the transport surface (2A);

- A first drive (10), for moving the first mould part (4) in at least the rounding position relative to the transport surface (2A) in a circle (11) with a radius around a rotation axis (12) extending perpendicularly to the transport surface (2A); and
- A second drive (20), for moving the second mould part (5) in at least the rounding position relative to the transport surface (2A) in a second circle (21) with a second variable radius around a rotation axis (22) extending perpendicularly to the transport surface (2A); wherein
- The device (1) is configured to keep the orientation of the first and second mould parts (4, 5), being the direction in which they extend, unchanged during the circular movement relative to the conveyor (2);
**characterized in that**
- The first and second drives (10, 20) are coupled and are arranged to always move the first and second mould parts (4, 5) in a circle (11, 21) with the same radius and at the same speed but mutually in an exactly opposite direction and thus in antiphase.

## Description

The present invention relates to a device for rounding dough pieces. Such devices are known in the art and generally serve to round dough pieces for forming rolls and the like.

A known device for this purpose is described in German Patent publication DE 460 808. The publication describes a mould part that can be moved in circles in with respect to a carrier for dough pieces, for rolling the dough pieces on the carrier. Once the dough pieces are rounded, the carrier can be taken away or it can be displaced in order to align a next set of dough pieces to be rounded with the carrier.

Although this device may work fine with dough pieces on a carrier, due to its construction with an inherent imbalance, it is not suitable for high speed rounding, as with high frequencies, it may start shaking. Additionally, the carrier handling may be cumbersome and require manual intervention when multiple rows of dough pieces are provided on the same carrier.

It is a goal of the present invention to take away these disadvantages and to further automate the rounding process and in general to provide a useful alternative to the prior art.

For that purpose, according to the present invention, a device for rounding dough pieces is proposed, comprising a conveyor with a transport surface for transporting the dough pieces in a transport direction, a first mould part, comprising one or more cups with an opening facing the transport surface, with a directional component perpendicular to the transport surface, movable between a rounding position in which the first mould part rests on the transport surface or is positioned adjacent thereto, and a release position in which the first mould part is located at a distance from the transport surface. The device according to the invention further comprises a second mould part, comprising one or more cups with an opening facing the transport surface, movable with a directional component perpendicular to the transport surface, between a rounding position in which the second mould part rests on the transport surface or is positioned adjacent thereto; and a release position in which the second mould part is located at a distance from the transport surface, and a first drive, for moving the first mould part in at least the rounding position relative to the transport surface in a circle with a radius around a rotation axis extending perpendicularly to the transport surface; and a second drive, for moving the second mould part in at least the rounding position relative to the transport surface in a second circle with a second variable radius around a rotation axis extending perpendicularly to the transport surface; wherein the device is configured to keep the orientation of the first and second mould parts, being the direction in which they extend, unchanged during the circular movement relative to the conveyor, wherein the first and second drives are coupled and are arranged to always move the first and second mould parts in a circle with the same radius and at the same speed but mutually in an exactly opposite direction and thus in antiphase.

By having two mould parts that are driven in an exactly opposite direction and thus in antiphase, the device is balanced, and can be operated at high frequencies, with a radius up to 60 mm or even 100 mm. Each of the mould parts may comprise one but preferably more cups, in order to round multiple dough pieces simultaneously.

The conveyor may for this purpose be an endless conveyor belt, allowing quick supply and discharge of dough pieces. For continuous operation, it is thinkable that the entire device according to the invention moves along with a conveyor belt, and returns when the moulds are in their release position. Alternatively, in a continuous processing dough processing lane, a buffer device may be present, for receiving dough products continuously, and delivering them in batches to the moulding device according to the invention. After moulding, the batches may be transferred to a continuously moving conveyor again.

The transition of the mould parts between the rounding position and the release position may according to an embodiment of the invention be done by lifting respectively lowering the conveyor surface, rather than the relatively heavy mould parts and their drive system.

According to the invention, the first and second drive may comprise a mechanical transmission, configured to vary a position of an engagement point for transferring the rotational movement of the rotation axis to the mould part between a position coinciding with the rotation axis and a position located at a maximum radius from the rotation axis.

By varying the engaging point for the circular movement, the size of the circle that is described by the mould parts is defined, or in other words its radius. When the engaging point coincides with the rotation axis, there is a circle with a zero radius, and effectively no movement. The rotational speed around the rotation axis determines the speed with which the circles are described. By changing the radius during rotation, a helix shape is followed by the mould parts.

It is to be noted that the mould parts of the device according to the invention themselves do not rotate. They follow a circular or helix shaped track, with a frequency that is dependent on the speed with which a rotation around the axis of rotation is made.

In an embodiment of a device according to the invention, the mechanical transmission comprises a shaft with a non-circular cross-section, on which a drive that can be adjusted independently of the radius engages at least partially or completely in a form-fitting manner so that the shaft rotates with the drive, for driving the circular movement of the mould parts at a rotational speed, therein allowing movement of the shaft relative to the drive in the axial direction of the shaft. The shaft needs to be non-circular to allow gripping it for rotation, while allowing sliding movement in the axial direction. Multiple shaped cross sections may be suitable, like an ellipse, a triangle, a square or pentagon or hexagon, or a cross or star shape.

The sliding movement in the axial direction is beneficial when the mechanical transmission is configured to vary the position of the engagement point of the rotational movement of the rotation axis on the mould part by an axial displacement of the rotation axis, which may be the case in a practical embodiment of the present invention.

The drives for the first and the second mould part may be electrically and/or mechanically coupled, in order to assure that both mould parts are operated at the same speed.

The drives may further comprise a first guide or bearing, which allows a movement of the mould parts in a first direction parallel to the transport surface, and a second guide or bearing, which allows a movement of the mould parts in a second direction parallel to the transport surface and perpendicular to the first direction, but which both and/or together impede a rotation of the mould parts. This is in order keep the mould parts in a fixed orientation with respect to the conveyor and/or its transport surface. An advantage hereof is that the rounded dough pieces are obtained in the same mutual orientations as the dough pieces had before rounding. Additionally, it allows to design the device according to the invention compact.

During operation, the drives may be configured to control the speed and the radius with which the mould parts are moved in a circle independently of each other, but a simultaneous increase of speed and radius is very well thinkable. The drives may in particular be configured to let the speed and/or radius of the circle in which the mould parts are moved increase from 0 to a predetermined maximum value and then decrease it again to 0, in particular according to a ramp-up and ramp-down speed and diameter progression.

For stability of the entire device, it is beneficial when the mold parts have an equal mass. However, it is their inertia that needs to be balanced, so with different masses (in particular due to different sizes of dough pieces) speed and radius may be used to compensate for discrepancies in mass.

To facilitate the transition between the rounding and the releasing position, the drives of a system according to the invention may be located entirely above the transport surface. This is especially useful in combination with a liftable conveyer configuration.

The invention will now be elucidated into more detail with reference to the following figures. Herein:
- Figure 1 shows an overview of a device according to the present invention;
- Figure 2 shows a detail of the device of figure 1; and
- Figures 3A - 3C show a further detail of the device from figure 2, in various states.

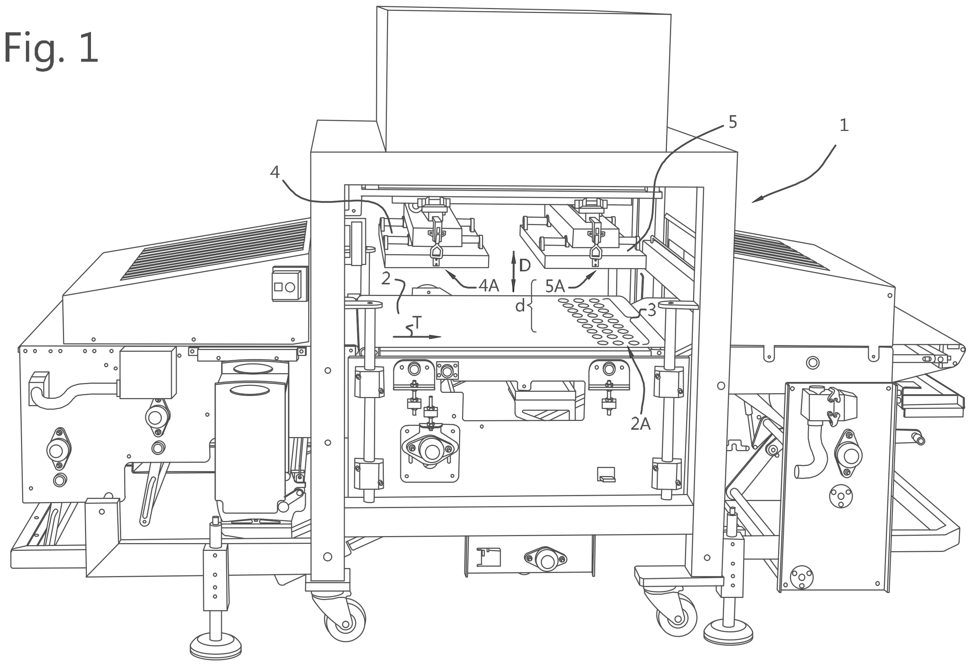

Figure 1 shows an overview of a device 1 according to the present invention for rounding dough pieces 3, comprising a conveyor 2 with a transport surface 2A for transporting the dough pieces 3 in a transport direction T. The device comprises a first mould part 4 comprising multiple cups 4A with an opening facing the transport surface 2A, movable with a directional component D perpendicular to the transport surface 2A, between a rounding position in which the first mould part 4 rests on the transport surface 2A; and a release position (shown) in which the first mould part 4 is located at a distance d from the transport surface 2A and a second mould part 5 comprising multiple cups 5A with an opening facing the transport surface 2A, movable with a directional component D perpendicular to the transport surface 2A, between a rounding position in which the second mould part 5 is positioned adjacent to the transport surface 2A; and a release position (shown) in which the second mould part 5 is located at a distance d from the transport surface 2A.

The transition of the mould parts 4, 5 between the rounding position and the release position (shown) may according to an embodiment of the invention be done by lifting respectively lowering the conveyor surface 2A, rather than the relatively heavy mould parts and their drive system.

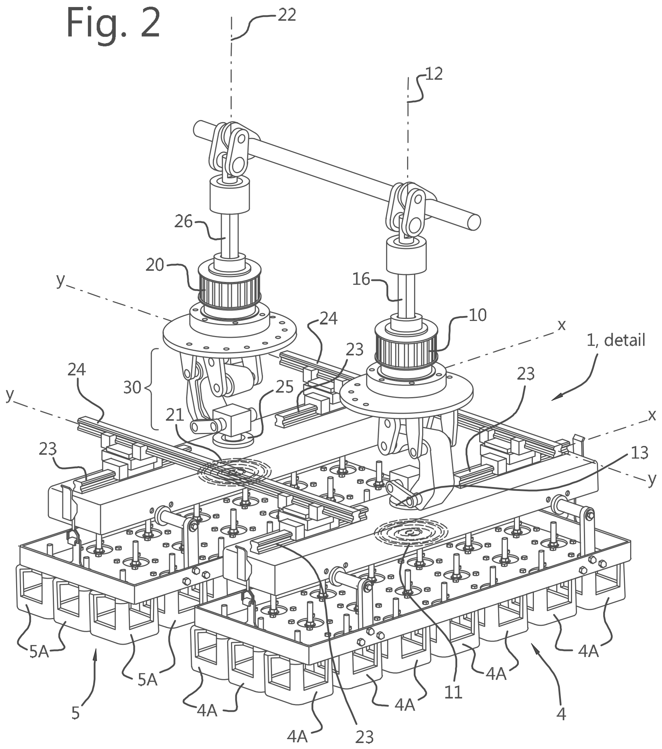

Figure 2 shows a detail from the device 1 from figure 1, showing a first drive 10, for moving the first mould part 4 in at least the rounding position relative to the transport surface 2A (not visible) in a circle 11 with a radius around a rotation axis 12 extending perpendicularly to the transport surface (not visible); and a second drive 20, for moving the second mould part 5 in at least the rounding position relative to the transport surface in a second circle 21 with a second variable radius around a rotation axis 22 extending perpendicularly to the transport surface; wherein the device 1 is configured to keep the orientation of the first and second mould parts 4, 5, being the direction X in which they extend, unchanged during the circular 11, 21 movement relative to the conveyor. The first and second drives 10, 20 are coupled and are arranged to always move the first and second mould parts 4, 5 in a circle 11, 21 with the same radius and at the same speed but mutually in an exactly opposite direction and thus in antiphase.

The drives 10, 20 comprise a first guide or bearing 23, which allows a movement of the mould parts 4, 5 in a first direction X parallel to the transport surface, and a second guide or bearing 24, which allows a movement of the mould parts in a second direction Y parallel to the transport surface and perpendicular to the first direction X, but which both and/or together impede a rotation of the mould parts 4, 5.

The drives 10, 20 are configured to control the speed and the radius with which the mould parts 4, 5 are moved in a circle independently of each other. 5. The drives 10, 20 may be electrically and/or mechanically coupled.

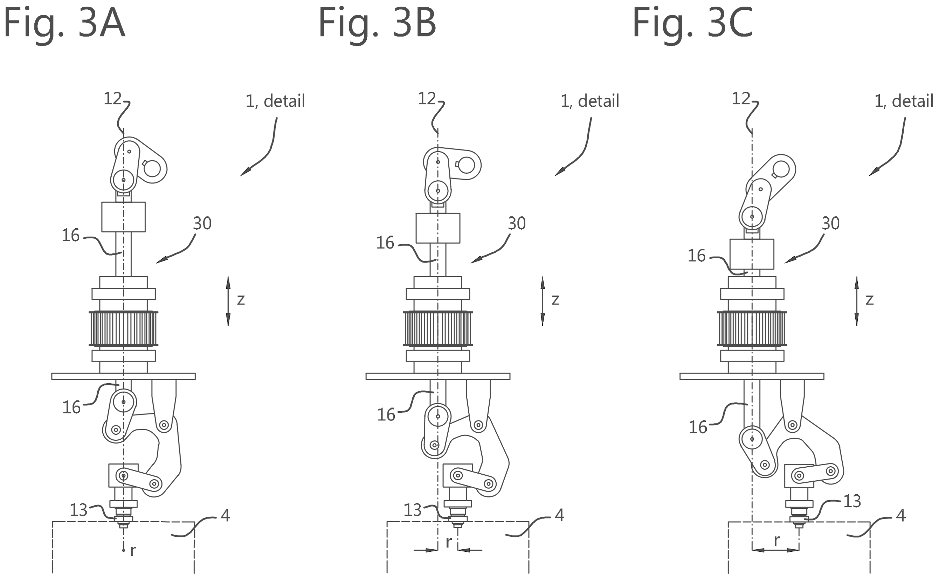

Figure 3 shows the mechanical transmission part that is used for this purpose.

Figures 3A - 3C show a further detail of the the mechanical transmission part 30 of the device 1 from figure 2, in various states. Visible is that the first and second drive 10, 20 (in this case drive 10 is shown) comprise a mechanical transmission, configured to vary a position of an engagement point 13 (and 25) for transferring the rotational movement of the rotation axis 12 to the mould part 4 between a position coinciding with the rotation axis12 (shown in figure 3A) and a position located at a maximum radius r from the rotation axis 12, shown in figure 2C, as well as a position in between in figure 3B. The mechanical transmission 30 comprises a shaft 16 (and 26) with a non-circular (square) cross-section, on which a drive 10 that can be adjusted independently of the radius engages at least partially or completely in a form-fitting manner so that the shaft 16 (and 26) rotates with the drive 10 (and 20), for driving the circular movement of the mould parts at a rotational speed, therein allowing movement of the shaft 16 relative to the drive 10 in the axial direction of the shaft 16.

The mechanical transmission 30 is configured to vary the position of the engagement point 13 of the rotational movement of the rotation axis 12 on the mould part 4 by an axial displacement Z of the rotation axis 16.

## Claims

1. Device for rounding dough pieces, comprising:
- a conveyor with a transport surface for transporting the dough pieces in a transport direction;
- A first mould part:
∘ comprising one or more cups with an opening facing the transport surface,
∘ with a directional component perpendicular to the transport surface, movable between:
• a rounding position in which the first mould part rests on the transport surface; and
• a release position in which the first mould part is located at a distance from the transport surface;
- A second mould part:
∘ comprising one or more cups with an opening facing the transport surface,
∘ movable with a directional component perpendicular to the transport surface, between
• a rounding position in which the second mould part is positioned adjacent to the transport surface; and
• a release position in which the second mould part is located at a distance from the transport surface;
- A first drive, for moving the first mould part in at least the rounding position relative to the transport surface in a circle with a radius around a rotation axis extending perpendicularly to the transport surface; and
- A second drive, for moving the second mould part in at least the rounding position relative to the transport surface in a second circle with a second variable radius around a rotation axis extending perpendicularly to the transport surface; wherein
- The device is configured to keep the orientation of the first and second mould parts, being the direction in which they extend, unchanged during the circular movement relative to the conveyor;
**characterized in that**
- The first and second drives are coupled and are arranged to always move the first and second mould parts in a circle with the same radius and at the same speed but mutually in an exactly opposite direction and thus in antiphase.

2. Device according to claim 1, wherein the first and second drive comprise a mechanical transmission, configured to vary a position of an engagement point for transferring the rotational movement of the rotation axis to the mould part between a position coinciding with the rotation axis and a position located at a maximum radius from the rotation axis.

3. Device according to claim 2, wherein the mechanical transmission comprises a shaft with a non-circular cross-section, on which a drive that can be adjusted independently of the radius engages at least partially or completely in a form-fitting manner so that the shaft rotates with the drive, for driving the circular movement of the mould parts at a rotational speed, therein allowing movement of the shaft relative to the drive in the axial direction of the shaft.

4. Device according to claim 2 and 3, wherein the mechanical transmission is configured to vary the position of the engagement point of the rotational movement of the rotation axis on the mould part by an axial displacement of the rotation axis.

5. Device according to one of the preceding claims, wherein the drives are electrically and/or mechanically coupled.

6. Device according to one of the preceding claims, wherein the drives comprise a first guide or bearing, which allows a movement of the mould parts in a first direction parallel to the transport surface, and a second guide or bearing, which allows a movement of the mould parts in a second direction parallel to the transport surface and perpendicular to the first direction, but which both and/or together impede a rotation of the mould parts.

7. Device according to one of the preceding claims, wherein the drives are configured to control the speed and the radius with which the mould parts are moved in a circle independently of each other.

8. Device according to one of the preceding claims, configured to let the speed and/or radius of the circle in which the mould parts are moved increase from 0 to a predetermined maximum value and then decrease it again to 0, in particular according to a ramp-up and ramp-down speed and diameter progression.

9. Device according to one of the preceding claims, wherein the mold parts have an equal mass.

10. Device according to one of the preceding claims, wherein the drive is located entirely above the transport surface.

11. Device according to any of the preceding claims, wherein the transition of the mould parts between the rounding position and the release position is done by lifting respectively lowering the conveyor surface, rather than the relatively heavy mould parts and their drive system.
